Europäisches Patentamt

European Patent Office

Office européen des brevets

(11) Publication number: **0 225 596 B1**

# EUROPEAN PATENT SPECIFICATION

(45) Date of publication of patent specification: **24.07.91**

(51) Int. Cl.⁵: **C08F 8/34**, C08F 20/54

(21) Application number: **86116788.0**

(22) Date of filing: **03.12.86**

The file contains technical information submitted
after the application was filed and not included in
this specification

(54) Method of producing sulfomethyl polyacrylamide polymers and sulfomethylamide unit containing polymers.

(30) Priority: **03.12.85 US 804036**

(43) Date of publication of application:
**16.06.87 Bulletin 87/25**

(45) Publication of the grant of the patent:
**24.07.91 Bulletin 91/30**

(84) Designated Contracting States:
**AT BE CH DE ES FR GB GR IT LI NL SE**

(56) References cited:
**US-A- 2 761 834**
**US-A- 3 979 348**

(73) Proprietor: **NALCO CHEMICAL COMPANY
One Nalco Center
Naperville Illinois 60566-1024(US)**

(72) Inventor: **Fong, Dodd W.
1275 Leverenz Road
Naperville Illinois 60565(US)**
Inventor: **Kowalski, David J.
1505 Ostrander
La Grange Park Illinois 60525(US)**

(74) Representative: **Rotter, Ulrich, Dipl.-Chem. Dr.
et al
Patentanwälte Dipl.-Ing. Olaf Ruschke
Dipl.-Ing. Hans E. Ruschke Dipl.-Ing. Jürgen
Rost Dipl.-Chem. Dr. U. Rotter Pienzenauer-
strasse 2
W-8000 München 80(DE)**

## Description

The invention relates to sulfomethylated polymers comprising poly(sulfomethylacrylamide) units and to the preparation of sulfomethyl polyacrylamide polymers.

In the US patent 39 79 348 a method of preparing water-soluble anionically modified acrylamide polymers in form of water-in-oil emulsion is disclosed where an adduct formed by formaldehyde and sulfurous acid is added to an acrylamide polymer which has a molecular weight of 10.000 to 23 million and a particle size of 2 nm to 5 $\mu$m and reacted. The temperature of reaction should not exceed 100°C; the temperature in the working example (no. 6) is 52°C. Structure of the product of reaction was not investigated and no spectroscopic evidenced for the presence of sulfomethylamide groupings in the polymer are given.

The US patent 27 61 834 describes polymers which are obtained by treating a homopolymer comprising acrylamide or methacrylamide units with a sulfurous acid compound. It is stated that the reaction can also be accomplished with simultaneous addition of formaldehyde and a sulfurous acid compound at temperatures which may vary between 20°C and 100°C. It is supposed that the reacted polymer would contain units including sulfomethylamide groups. According to a working example a polyacrylamide solution is reacted with formaline and sodium metabisulfite at 50°C to give a clear viscous solution.

Neither this specific example nor the supposed structure are supported by analytical or spectroscopic data which could establish the presence of sulfomethylacrylamide units. In an article published in the December 1956 issue of Industrial and Engineering Chemistry, vol. 48, no. 12, pages 2132-7, A.M. Schiller and T.J. Suen also reported on a technique of introducing sodium sulfomethyl groups into polyacrylamide through the reaction with formaldehyde and sodium bisulfite. The authors taught that the sulfomethylation reaction would take place at pH levels of higher than 10 and at temperatures in the order of 50-75°C. This teaching has remained uncontroverted in the literature during the years intervening to the present.

The present invention relies on the fundamental and surprising experience that with use of Carbon-13 Nuclear Magnetic Resonance technology unexpectedly no sulfomethylation of polyacrylamide occurs under the reaction conditions of both high pH and comparatively low temperature which conditions were specified by Schiller and Suen in the referenced article and in the US patent 27 61 834. Instead, polyacrylamide undergoes hydrolysis in the reaction milieu and complex equilibria species form among formaldehyde, bisulfite and the ammonia that is generated.

Consequently, in the state of art references factually no practical route was disclosed or suggested to really obtain sulfomethylated polyacrylamide structures.

The object of the present invention is to provide sulfomethyl polyacrylamide structures established by reliable methods of analysis and a method of synthesizing such sulfomethyl polyacrylamide structures by using formaldehyde and bisulfite. A method was aspired which would open a simple, effective and inexpensive chemical route to sulfomethyl acrylamide polymers.

According to the present invention sulfomethylamide containing polymers are prepared from acrylamide-containing polymers with sodium formaldehyde bisulfite (or formaldehyde and sodium bisulfite) in from 1/4 to 8 hours at a temperature of 110°C to 250°C under agitation and preferably at a pH of less than 12, in particular at a pH of 3 to 8. Under these reaction conditions, sulfomethylamide readily forms in high conversion, based on the sodium formaldehyde bisulfite charged. The products, characterized by C-13 NMR spectroscopy, Infra-Red spectroscopy, and colloid titration, contain at least three functional groups: namely, carboxylate, primary amide and sulfomethylamide. It was found that the elapsed time for completing the sulfomethylation is the result of such reaction kinetics as pH and temperature and not an independent variable.

In the drawings,

Fig. 1 is Carbon-13 Nuclear Magnetic Resonance spectrum of a solution of polyacrylamide and sodium formaldehyde bisulfite, at a pH of 12, after mixing;

Fig. 2 is a similar spectrum after the solution was heated for 4 hours at 75°C; and

Fig. 3 is the Carbon-13 NMR spectrum for sulfomethylamide copolymer according to the present invention.

The reaction of polyacrylamide with formaldehyde and bisulfite to produce the sulfomethylated amide is of considerable interest because of the many industrial applications that have been proposed for inexpensive polymeric sulfonates, such as water treatment agents, drilling field dispersants and flocculents. A variety of reactions have been postulated as taking place in the aforementioned chemical system, but no persuasive evidence has been adduced heretofore to support the proposition that sulfomethylation of the amide occurs under the conditions generally thought to produce this adduct. On the contrary, it was learned that the major products formed at a pH of 12 and at temperatures in the order of 75°C are partially hydrolyzed polyacrylamide and the mono-, bis- and tris-sulfomethylamine.

The starting polymer is an acrylamide units containing polymer and preferably an acrylamide-acrylic acid copolymer, in particular with a ratio of about 75 mol percent of acrylamide units.

Advantageously, polyacrylamide is first obtained from the polymerization of acrylamide in an aqueous solution using redox initiators. Polymerizations conducted in a 28% solution produced polymer having an average molecular weight of 6000 as determined by GPC. The source of formaldehyde and bisulfite for the subsequent sulfomethylation reaction was selected to be 1:1 sodium formaldehyde bisulfite (hydroxymethanesulfonic acid, sodium salt) purchased from a commercial source. This latter material exhibited a sharp C-13 line at pH 6 and was employed without further purification. As reaction medium preferably an aqueous medium is used.

Reaction conditions and results are set forth in the working examples described hereinbelow; and Carbon-13 NMR spectra were obtained using a JEOL® FX90Q operating at 22.5 MHz for carbon. Since no attempt was made to quantify either reactants or products, spectra were obtained using 45° pulses, noise decoupling, and recycle times of 3 seconds. At the end of accumulation, an insert containing hexamethyl disiloxane was introduced into the sample tube. The resulting peak was used to reference chemical shifts to TMS (all references herein to chemical shifts use the delta scale). Spectra were taken at 30°C and represent the addition of 3000 transients. Since spectral accumulation requires about 2.5 hours, the spectrum obtained "after mixing" represents a composite species evolving during this period.

The sulfomethylated polymer of the present invention comprise poly(sulfomethyl acrylamide) units and a preferred sulfomethylated polymer comprise at least three functional groups selected from the group consisting of carboxylate, primary amide and sulfomethylamide groups, especially 10 to 20 % of sulfomethylamide groups and 30 to 40 % of carboxylate groups, the percentages being related to the mol proportion in the polymer.

The term "sulfomethylpolyacrylamide" is used herein to encompass the sulfomethylated homopolymers of acrylamide or their homologs and the sulfomethylated copolymers, including terpolymers, of acrylamide or their homologs, with acrylic acid or its homologs, the essential characteristic of the polyacrylamide moiety being the presence of a primary amide group.

Sulfomethylated polymers of the invention are characterized by a carbon-13 NMR spectrum having signals at 56,5 (methylene) and 178 (secondary amide carbonyl) and IR absorption bands at 1,200, 1,050 and 1,500 cm$^{-1}$.

## Example 1

A solution of poly(acrylamide [75 m %]-acrylic acid) (150 g, 27.5% in water) and sodium formaldehyde bisulfite (15.5 g), pH 4.3, was heated to 150°C. and maintained at that temperature for four hours in a 300 ml. Parr reactor which was equipped with a mechanical stirrer and a thermocouple. The resultant product was cooled to room temperature. The pH of the resulting polymer solution was 5.9. Results of C-13 NMR analysis showed that the polymer contained about 20% sulfomethylamide and about 30% carboxylate.

## Example 2

A solution of poly(acrylamide [75 m %]-acrylic acid) (150 g, 27.5% in water) and sodium formaldehyde bisulfite 15.5 g), pH 4.3, was heated to and maintained at 120°C. for four hours in a 300 ml. Parr reactor which was equipped with a mechanical stirrer and a thermocouple. The resultant product was cooled to room temperature. The pH of the resulting polymer solution was 5.6. Results of C-13 NMR analysis showed that the polymer contained about 15% sulfomethylamide and about 40% carboxylate.

## Example 3

(a) A solution of polyacrylamide (100 g, 28.5%) and sodium formaldehyde bisulfite (16.1 g), pH adjusted to 13 with 50% NaOH, was heated to 50°C. for three hours. Results of C-13 NMR analysis of the product showed no sulfomethylamide formation.

(b) The reaction mixture was again heated, to 90°C. for three hours. Results of C-13 NMR analysis of the product showed no sulfomethylamide formation.

(c) The reaction mixture was then heated in a Parr reactor to 150°C. for four hours. The pH of the final polymer solution was 9.8. Results of C-13 NMR analysis of the product showed that the resulting polymer contained about 10% sulfomethylamide.

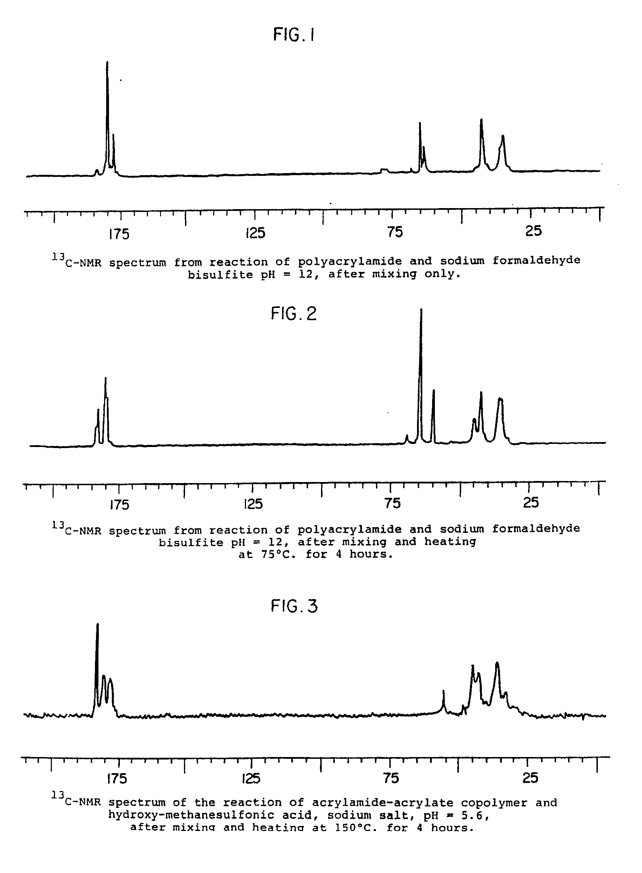

In order to enhance the understanding of the invention, reference will now be made to the drawing. There, Figs. 1 and 2 are Carbon-13 NMR spectra established by the aforementioned Dennis P. Bakalik for a solution of polyacrylamide and sodium formaldehyde bisulfite (1:0.5), at a pH of 12. The spectrum of Fig. 1 demonstrates that some reaction takes place rather quickly at ambient temperatures and high pH.

The species principally responsible for the spectrum of Fig. 1 can be assigned and indicate the formation of a terpolymer of acrylamide, methylol acrylamide, and acrylate salt in addition to some low molecular weight species derived from formaldehyde, bisulfite and ammonia. The peak at 180.3 is due to the carbonyl of acrylamide in the terpolymer, while the broad peaks at 35.8 and 42.9 represent backbone carbons. The peaks at 177.9 and 64.4 are indicative of the carbonyl and methylene of methylol acrylamide units. The peak at 183.7 results from the acrylate carbonyl produced via hydrolysis.

Other major peaks present in the spectrum of Fig. 1 include those at 79.1, 78.1, 68.2 and 65.2. The broad peak at 78.1 can be assigned to unreacted hydroxymethanesulfonate, through spiking experiments, while the peak at 65.2 represents the reaction product of ammonia with two moles of hydroxymethanesulfonate. The species responsible for the peak at 68.2 is a reaction product of ammonia with formaldehyde since this species can be generated through stepwise addition of ammonium hydroxide to an aqueous solution of paraformaldehyde at pH = 12. The exact nature of this formaldehyde-ammonia adduct is unknown. The peak at 79.1 results from molecular species derived from ammonia, formaldehyde and bisulfite, other than the 1:1, 1:2, and 1:3 complexes. It is sufficient to note that, upon heating, neither of the unassigned species, 68.2 nor 79.1, survive and both are converted into the following reaction products:

(1) $H_2NCH_2SO_3Na$
(2) $HN(CH_2SO_3Na)_2$
(3) $N(CH_2SO_3Na)_3$

The spectrum of Figure 2 was obtained after heating the reaction mixtures for 4 hours at 75° C. These are conditions that have been taught in the prior art as producing sulfomethylated polyacrylamide. The two major groupings of peaks in the carbonyl region at 180.5, 181.0 and 183.9, 184.4 are from acrylamide and acrylate carbonyls respectively. These pairs of peaks represent the major sequence triads generated on basic hydrolysis of polyacrylamide. The broad peaks at 35.8, 42.9, and 45.5 are due to backbone carbons of the copolymer.

The peaks at 60.4, 65.3 and 69.7 are assigned respectively to the mono-, di- and tri-substituted amines resulting from reaction of ammonia with hydroxymethanesulfonate. These assignments were made by examining the interconversion of species in the reaction of ammonia with sodium formaldehyde bisulfite under a variety of stoichiometric conditions.

Significantly, the spectrum of Fig. 3, representing a reaction product according to the present invention, exhibits an absence of peaks at 60.4, 65.3 and 69.7, representing the substituted amines. furthermore, the spectrum of Fig. 3 is characterized by the occurrence of signals at 56.5 and 178. The 178 signal is consistent with the presence of a secondary amide. The 56.5 signal was determined to be a methylene from an off-resonance experiment. The broadness of this signal suggests it is a part of the polymer. The signal is assigned to the methylene between the nitrogen of the amide and the sulfur of the sulfonate.

The presence of sulfonate is further confirmed by absorption bands at 1200 and 1050 $cm^{-1}$ in IR spectra of sulfomethylamide copolymer prepared according to the present invention at a pH of 5.5, and when acidified to a pH of 1. The presence of secondary amide is confirmed by an absorption band at 1550 $cm^{-1}$ after the sample was acidified to pH 1 to remove carboxylate salt interference.

The amount of sulfomethylamide group incorporated into the copolymers can be determined by photometric colloid titration at two pH's. The principle of this method is based on the fact that formaldehyde bisulfite will not be detected by this method. At a pH of 2-3, the carboxylic acid functionality will be negligibly ionized so that only the strong sulfonate group incorporated in the backbone will be determined by titration. At a pH of 10, since the carboxylic acid is completely ionized, both it and the sulfonate group will be titrated. The amount of sulfomethylamide incorporation determined by this method is in good agreement with that determined by the C-13 NMR method.

**Claims**

1. A method for the preparation of sulfomethyl polyacrylamide polymers wherein an acrylamide units containing starting polymer is reacted with formaldehyde and bisulfite by heating together and agitating, characterized in that the reaction is carried out at a temperature of 110° C to 250° C.

2. The method of claim 1, characterized in that the initial pH of the reaction mixture is adjusted to less than about 12.

3. The method of claim 1 or 2, characterized in that the initial pH of the reaction mixture is adjusted to between 3 and 8.

4. The method according to any of claims 1 to 3, characterized in that the starting polymer is an acrylamide-acrylic acid copolymer, preferably with a ratio of about 75 mol percent of acrylamide units.

5. The method according to any of claims 1 to 4, characterized in that the reaction is performed within a period of 15 minutes to 8 hours.

6. The method according to any of claims 1 to 5, characterized in that as the reaction medium an aqueous medium is used.

7. Sulfomethylated polymer comprising poly-(sulfomethylacrylamide) units which is obtainable according to the method of any of claims 1 to 6.

8. Sulfomethylated polymer according to claim 7, comprising at least three functional groups selected from the group consisting of carboxylate, primary amide and sulfomethylamide groups.

9. Sulfomethylated polymer according to any of claims 7 to 8, comprising 10 to 20 % of sulfomethylamide groups and 30 - 40 % of carboxylate groups, the percent being related to the mol proportion in the polymer.

10. Sulfomethylated polymer according to any of claims 7 to 9, characterized in that its carbon-13 NMR spectrum reveals signals at 56,5 (methylene) and 178 (secondary amide carbonyl) and IR absorption bands at 1.200, 1.050 and 1.500 cm$^{-1}$.

11. Sulfomethylated polymer according to any of claims 7 to 10, characterized in that it is a copolymer or a terpolymer of acrylamide and/or its homologs with acrylic acid and/or its homologs.

## Revendications

1. Procédé de préparation de polymères de sulfométhyl polyacrylamide, dans lequel on fait réagir un polymère de départ contenant des unités d'acrylamide avec du formaldéhyde et du bisulfite en les chauffant ensemble et en les agitant, caractérisé en ce que la réaction est réalisée à une température de 110°C à 250°C.

2. Procédé suivant la revendication 1, caractérisé en ce que l'on ajuste le pH initial du mélange de réaction à moins d'environ 12.

3. Procédé suivant l'une ou l'autre des revendications 1 et 2, caractérisé en ce que l'on ajuste le pH initial du mélange de réaction entre environ 3 et 8.

4. Procédé suivant l'une quelconque des revendications 1 à 3, caractérisé en ce que le polymère de départ est un copolymère d'acrylamide-acide acrylique, et de préférence avec un rapport d'environ 75 moles % d'unités d'acrylamide.

5. Procédé suivant l'une quelconque des revendications 1 à 4, caractérisé en ce que l'on réalise la réaction en une période de 15 minutes à 8 heures.

6. Procédé suivant l'une quelconque des revendications 1 à 5, caractérisé en ce que l'on utilise comme milieu de réaction un milieu aqueux.

7. Polymère sulfométhylé comprenant des unités de poly(sulfométhyl acrylamide), que l'on peut obtenir par le procédé suivant l'une quelconque des revendications 1 à 6.

8. Polymère sulfométhylé suivant la revendication 7, caractérisé en ce qu'il comprend au moins trois groupes fonctionnels choisis dans le groupe comprenant les groupes carboxylate, amide primaire et sulfométhylamide.

9. Polymère sulfométhylé suivant l'une quelconque des revendications 7 à 8, caractérisé en ce qu'il comprend 10 à 20 % de groupes sulfométhylamide et 30 à 40 % de groupes carboxylate, les pourcentages étant liés à la proportion molaire dans le polymère.

10. Polymère sulfométhylé suivant l'une quelconque des revendications 7 à 9, caractérisé en ce que son spectre RMN de carbone-13 révèle des signaux à 56,5 (méthylène) et 178 (carbonyle d'amide secondaire) et des bandes d'absorption IR à 1200, 1050 et 1500 cm$^{-1}$.

11. Polymère sulfométhylé suivant l'une quelconque des revendications 7 à 10, caractérisé en ce qu'il est un copolymère ou un terpolymère d'acrylamide et/ou de ses homologues avec de l'acide acrylique et/ou ses homologues.

## Patentansprüche

1. Verfahren zur Herstellung von Sulfomethylpolyacrylamid-Polymeren, bei dem ein Acrylamideinheiten enthaltendes Ausgangspolymer mit Formaldehyd und Bisulfit unter Erhitzen und Rühren umgesetzt wird, da<u>durch gekennzeichnet, daß man die Umset</u>zung bei einer Temperatur von 110°C bis 250°C ausführt.

2. Verfahren nach Anspruch 1, <u>dadurch gekenn-</u>

zeichnet, daß der pH-Wert des Reaktionsgemisches anfangs auf weniger als etwa 12 eingestellt wird.

3. Verfahren nach Anspruch 1 oder 2, dadurch gekennzeichnet, daß der pH-Wert des Reaktionsgemisches anfangs auf einen Wert zwischen 3 und 8 eingestellt wird.

4. Verfahren nach einem der Ansprüche 1 bis 3, dadurch gekennzeichnet, daß das Ausgangspolymer ein Acrylamid-Acrylsäure-Copolymer, bevorzugt mit einem Verhältnis von etwa 75 Mol-% Acrylamideinheiten ist.

5. Verfahren nach einem der Ansprüche 1 bis 4, dadurch gekennzeichnet, daß die Umsetzung innerhalb eines Zeitraums von 15 Minuten bis 8 Stunden durchgeführt wird.

6. Verfahren nach einem der Ansprüche 1 bis 5, dadurch gekennzeichnet, daß als Reaktionsmedium ein wäßriges Medium verwendet wird.

7. Sulfomethyliertes Polymer mit Poly-(sulfomethylacrylamid)-Einheiten, erhältlich nach dem Verfahren gemäß einem der Ansprüche 1 bis 6.

8. Sulfomethyliertes Polymer nach Anspruch 7 aus mindestens drei funktionellen Gruppen, gewählt aus der Reihe der Carboxylat-, primären Amid- und Sulfomethylamidgruppen.

9. Sulfomethyliertes Polymer nach einem der Ansprüche 7 bis 8, aus 10 bis 20 % Sulfomethylamidgruppen und 30 - 40 % Carboxylatgruppen, wobei die Prozente auf den Molanteil in dem Polymeren bezogen sind.

10. Sulfomethyliertes Polymer nach einem der Ansprüche 7 bis 9. dadurch gekennzeichnet, daß sein C-13-NMR-Spektrum Signale bei 56.6 (Methylen) und 178 (sekundäres Amidcarbonyl) und das IR-Absorptionsspektrum Banden bei 1.200, 1.050 und 1.500 cm$^{-1}$ zeigt.

11. Sulfomethyliertes Polymer nach einem der Ansprüche 7 bis 10, dadurch gekennzeichnet, daß es ein Copolymer oder ein Terpolymer von Acrylamid und/oder dessen Homologen mit Acrylsäure und/oder dessen Homologen ist.

## FIG. I

175 125 75 25

$^{13}$C-NMR spectrum from reaction of polyacrylamide and sodium formaldehyde
bisulfite pH = 12, after mixing only.

## FIG. 2

175 125 75 25

$^{13}$C-NMR spectrum from reaction of polyacrylamide and sodium formaldehyde
bisulfite pH = 12, after mixing and heating
at 75°C. for 4 hours.

## FIG. 3

175 125 75 25

$^{13}$C-NMR spectrum of the reaction of acrylamide-acrylate copolymer and
hydroxy-methanesulfonic acid, sodium salt, pH = 5.6,
after mixing and heating at 150°C. for 4 hours.